Europäisches Patentamt

European Patent Office

Office européen des brevets

(19)

(11) Veröffentlichungsnummer: **0 017 232**
**B1**

(12)

# EUROPÄISCHE PATENTSCHRIFT

(45) Veröffentlichungstag der Patentschrift:
17.11.82

(21) Anmeldenummer: 80101787.2

(22) Anmeldetag: 03.04.80

(51) Int. Cl.³: **C 08 G 59/40,** C 08 L 63/00,
C 09 D 5/40, C 25 D 13/06

(54) Umsetzungsprodukte von verkappten Polyisocyanaten mit Additionsprodukten einer Epoxidverbindung mit einem Guanidin und deren Verwendung in Überzugsmitteln und kathodischen Elektrotauchlacken.

(30) Priorität: 07.04.79 DE 2914085

(43) Veröffentlichungstag der Anmeldung:
15.10.80 Patentblatt 80/21

(45) Bekanntmachung des Hinweises auf die Patenterteilung:
17.11.82 Patentblatt 82/46

(84) Benannte Vertragsstaaten:
AT BE CH DE FR GB IT LI NL SE

(56) Entgegenhaltungen:
DE-A-2 415 100
DE-A-2 649 402
DE-B-1 720 507
US-A-3 947 338
I. SKEIST »Epoxy Resins«, 1958, REINHOLD
PUBLISHING CORP New York

(73) Patentinhaber: BASF Aktiengesellschaft,
Carl-Bosch-Strasse 38, D-6700 Ludwigshafen (DE)

(72) Erfinder: Schenck, Hans-Uwe, Dr., Erlenweg 6,
D-6706 Wachenheim (DE)
Erfinder: Gulbins, Erich, Dr., Ladenburger Strasse 80,
D-6900 Heidelberg-Neuenheim (DE)

EP 0 017 232 B1

**0 017 232**

## Umsetzungsprodukte von verkappten Polyisocyanaten mit Additionsprodukten einer Epoxydverbindung mit einem Guanidin und deren Verwendung in Überzugsmitteln und kathodischen Elektrotauchlacken

Die vorliegende Erfindung betrifft ein Additionsprodukt und seine Verwendung als kationisches Bindemittel, insbesondere für die kathodische Elektrotauchlackierung.

Wäßrige Dispersionen oder Lösungen von kationische Gruppen tragenden Harzen für den Lacksektor sind seit längerem bekannt. Besonders für das Verfahren der Elektrotauchlackierung bieten solche Produkte, die sich an einem als Kathode geschalteten metallischen Werkstück abscheiden lassen, besondere Vorteile.

Im Gegensatz zur anodischen Elektrotauchlackierung treten dabei keine Probleme durch Metallauflösung auf, die Passivierungsschichten werden nicht geschädigt und zudem bringen in der Regel die kationischen Überzüge Verbesserungen im Korrosionsschutz mit sich. Kathodisch abscheidbare Überzugsmittel waren bislang auf Basis von Amin-, Ammonium-, Sulfonium-, oder Phosphoniumgruppen tragenden wasserdispergierbaren oder wasserlöslichen Harzen aufgebaut. Solche Bindemittel werden etwa beschrieben in den DE-OS

2 033 770, 2 003 123, 2 065 775, 2 163 143, 2 142 449, 2 751 869, 2 751 941, 2 743 520, 2 237 114, 2 261 804, 2 265 220, 2 339 398, 2 611 673, 2 531 960, 2 131 060, 2 252 536, 2 265 195, 2 363 074, 2 603 666, 2 701 002, 2 634 229, 2 634 211, 2 548 394, 2 557 562, 2 057 799, 2 345 044, 2 325 177, 1 814 072, 2 426 996, 2 541 234, 2 715 259, 2 616 591, 2 752 255, 2 752 256, 2 707 405, 2 460 470, 1 930 949, 1 546 840, 1 276 260, 1 546 854, 1 546 848, 1 930 949, 2 002 756, 2 748 511, 2 620 612, 2 165 361, 1 669 593.

Diese Bindemittel haben den Nachteil, daß sie, sofern sie quartäre Ammoniumgruppen tragen, zwar im neutralen bis alkalischen pH-Bereich als Salze in Wasser löslich oder dispergierbar sind, daß aber nach Abscheidung als quartäre Ammoniumbasen und Einbrennen besonders bei den gewünschten möglichst niedrigen Einbrenntemperaturen diese polaren Gruppen weitgehend erhalten bleiben. Die Phosphonium- und Sulfoniumgruppen tragenden Polymeren haben den Nachteil der Instabilität dieser Gruppen in neutralen bis alkalischen Elektrotauchlackbädern, wie sie vom Anwender gewünscht werden.

Die Verwendung von neutralisierten, primären, sekundären oder tertiären Aminofunktionen zur Solubisierung der Bindemittel hat den Nachteil, daß eine sehr hohe Menge an Aminfunktionen benötigt wird, um eine Solubilisierung im neutralen oder alkalischen pH-Bereich zu erreichen, da in der Regel in diesem Fall nur eine Teilprotonierung möglich ist. Dies bedeutet, daß die Harze auch nach dem Abscheiden und Einbrennen einen erheblichen Anteil an basischem Stickstoff behalten, was die Wasserempfindlichkeit und Korrosionsanfälligkeit der Filme erhöht.

Es bestand daher die Aufgabe, ein Additionsprodukt aufzuzeigen, das sich zur Herstellung von Bindemitteln für Überzugsmittel eignet, die die oben genannten Nachteile nicht besitzen.

Überraschenderweise wurde gefunden, daß es möglich ist, durch Einführung von Guanidinfunktionen Bindemittel zu erhalten, die ohne weiteres im neutralen bis alkalischen pH-Bereich in stabile wäßrige Lösungen oder Dispersionen, insbesondere für Elektrotauchlackbäder überführt werden können. Guanidine sind basische Derivate (Amidine) der Kohlensäure bzw. des Amids der Kohlensäure, dem Harnstoff. Infolge der sehr hohen Basizität der Guanidingruppe ($pK_a$ des unsubstituierten Guanidins = 13,65 bei 25°C — Hall, Sprinkle J. Amer. Chem. Soc. 1932, 54, 3469), die durch eine Alkylsubstitution eher noch gesteigert werden kann und die um über 4 $pK_a$-Einheiten über dem $pK_a$-Wert von Ammoniak und über 2 $pK_a$-Einheiten über dem der stärksten aliphatischen Aminen liegt, ist es möglich auch bei kleiner Menge an basischen Gruppen im Harz, sogar bei Vollneutralisation wäßrige Lösungen oder Dispersionen im neutralen bis alkalischen pH-Bereich herzustellen. Ein weiterer Vorteil der Guanidinfunktion besteht darin, daß sie beim Einbrennen entweder infolge ihrer hohen NH-Funktionalität bei angepaßter Vernetzungsmethode wie z. B. Reaktionen mit aus verkappten Isocyanatfunktionen gebildeten freien Isocyanatogruppen zu nichtionischen und damit weitaus unpolareren Gruppen abreagieren kann oder daß sie unter Einwirkung von Wasser und Wärme in $CO_2$, Ammoniak und entsprechend dem Substitutionsgrad der Guanidinfunktion in die entsprechenden primären bzw. sekundären Amine zerfallen kann. Diese sind dann weit weniger basisch als die Ausgangsguanidinfunktion. Außerdem können diese Aminofunktionen mit geeigneten Vernetzungsmethoden (z. B. durch Reaktion mit Isocyanatfunktionen) in nichtionische deutlich unpolarere Gruppen umgeformt werden.

Gegenstand der Erfindung ist ein epoxidgruppenfreies, unvernetztes Additionsprodukt, dadurch gekennzeichnet, daß es durch Umsetzung

a)   einer Epoxidverbindung mit
b)   Guanidin oder einem Guanidinderivat

2

erhalten worden ist, wobei mindestens 1 Mol Guanidin oder Guanidinderivat (b) pro Epoxidäquivalent der Epoxidverbindung (a) umgesetzt worden ist, das Additionsprodukt zusätzlich verkappte Isocyanatgruppen enthält und gegebenenfalls durch Säurezusatz teilweise oder vollständig neutralisiert worden ist.

Gegenstand der vorliegenden Erfindung ist außerdem die Verwendung des erfindungsgemäßen Additionsproduktes, gegebenenfalls in Kombination mit einem vollverkappten Polyisocyanat, einem Aminoplastharz und/oder einem Phenoplastharz als Bindemittel in Überzugsmitteln sowie seine Verwendung in wäßrigen Überzugsmitteln zur kathodischen Elektrotauchlackierung von Metallteilen, wobei die Überzugsmittel zusätzlich 5 bis 40, vorzugsweise 15 bis 30 Gew.-%, bezogen auf das gesamte Bindemittel, eines verkappten Polyisocyanats, eines Aminoplastharzes und/oder eines Phenoplastharzes enthalten können.

Bei der Herstellung des erfindungsgemäßen Additionsproduktes geht man von einer mindestens eine Epoxidgruppe enthaltenden Epoxidverbindung, vorzugsweise von einem Glycidäther eines mehrwertigen Alkohols oder Phenols aus. Als mehrwertige Alkohole kommen dabei z. B. in Frage:

Aliphatische Alkandiole mit 2 bis 8 Kohlenstoffatomen, Alkantriole, wie Glycerin, Tetrole, Pentaerythrit oder cycloaliphatische Diole, wie Bis-(4-hydroxycyclohexyl)-2,2-propan. Besonders bevorzugt sind mehrwertige, mehrkernige Phenole, insbesondere Bisphenol A. Weitere geeignete Alkohole sind in der DE-OS 2 261 804 aufgezählt. Diese mehrwertigen Alkohole bzw. Phenole werden mit Epichlorhydrin zum Glycidäther veräthert. Es können aber auch epoxidierte Öle z. B. epoxidiertes Leinöl oder Polybutadienöl verwendet werden.

Die Epoxidverbindung wird mit Guanidin, einem Guanidin-Derivat, wie z. B. einem Alkylguanidin, wie Dimethylguanidin oder einem davon abgeleiteten Guanidiniumsalz umgesetzt. Als Guanidiniumsalz kommen etwa in Frage:

Guanidin-Carbonat, Guanidinacetat, Guanidinnitrat u. a.

Zur Herstellung der erfindungsgemäß bevorzugten epoxidgruppenfreien Additionsprodukte wird pro Epoxidgruppe mindestens ein Mol Guanidin bzw. eines seiner Salze eingesetzt. Das Verhältnis von Epoxidgruppen zu Guanidin muß wohl abgestimmt sein, um eine vorzeitige Vernetzung zu verhindern. Bei deutlich weniger als ein Mol Guanidin pro Äquivalent umzusetzender Epoxidgruppen bleiben unerwünscht viele Epoxidgruppen im Bindemittel erhalten, die zu Nebenreaktionen Anlaß geben können. Die Umsetzung kann in Substanz oder in geeigneten Lösungsmitteln, wie Dioxan, Dimethylformamid oder Äthylenglykol bei Temperaturen zwischen 10 und 150°C, vorzugsweise zwischen 20 und 80°C erfolgen.

Um Vernetzungen zu vermeiden, kann auch zunächst ein deutlicher molarer Überschuß an Guanidin verwendet werden, der nach Verbrauch der Epoxidgruppen wieder durch Destillation, vorzugsweise im Vakuum, aus dem Reaktionsgemisch entfernt wird.

Es kann auch zunächst in einer Vorreaktion ein Harzkörper z. B. auf Basis von Umsetzungsprodukten aus aliphatischen oder aromatischen Polyepoxidharzen mit Polyolen (z. B. hydroxylgruppenhaltigen Polyurethanen, hydroxylgruppenhaltigen Polyäthern u. a.) oder Polyphenolen (z. B. Umsetzungsprodukten aus Polyepoxiden mit einem Überschuß an Bisphenol A) aufgebaut werden, der pro Einzelmolekül eine so hohe Restepoxidfunktionalität hat, daß durch Umsetzung mit Guanidin (ca. 1 Mol Guanidin pro Mol Restepoxidgehalt) noch keine Vernetzung erfolgt, das Harz aber durch Neutralisation im schwach sauren oder bevorzugt im pH-Bereich oberhalb 7 wasserdispergierbar oder wasserlöslich wird.

Unabhängig von dem gewählten Weg, Guanidinfunktionen in das Bindemittel einzuführen, kann die für den gewünschten Grad der Solubilisierung (gute Wasserverträglichkeit der Harze oberhalb pH 7, d. h. voll- oder teilneutralisierte Guanidinfunktionen, aber Ausfällung im stark alkalischen Bereich, um kataphoretische Abscheidung zu gewährleisten) nötige Menge an Guanidinfunktion im Verhältnis zum restlichen Harzkörper schwanken. Diese Menge hängt zum einen vom Molekulargewicht und zum anderen von der Gesamtstruktur des Endproduktes ab, so etwa davon, wie die Balance zwischen hydrophilen bzw. polaren Gruppen (Hydroxyl-, Äther-, Amid- oder Urethangruppen) und hydrophoben Bausteinen im Harz ohne Berücksichtigung der Guanidinmodifizierung aussieht.

Der Grad der Modifizierung mit Guanidinfunktionen, das Molekulargewicht und die Struktur des Harzgrundkörpers sollten so ausgewählt werden, daß eine beständige Dispersion oder Lösung entsteht, wenn das teil- oder vollneutralisierte Produkt mit einem wäßrigen Medium gemischt wird. Aus der so erhaltenen Dispersion oder Lösung sollte das Harz katophoretisch zu einem fest auf der Kathode haftenden durch Abspülen mit Wasser nicht mehr leicht entfernbaren Film abscheidbar sein.

Die genannten Größen — Struktur, Molekulargewicht und Grad der Modifizierung mit Guanidin — sind gekoppelte Größen in bezug auf die Erzielung der gewünschten Endeigenschaften. So ist bei höherem Gehalt des Harzes an sonstigen polaren Gruppen, wie Hydroxyl- oder Ätherfunktionen ein geringerer Grad der Modifizierung mit Guanidinfunktionen nötig. Die Einstellung der optimalen Verhältnisse zwischen Molekulargewicht, Struktur des Basisharzes und Grad der Modifizierung mit Guanidin um die gewünschten Eigenschaften zu erhalten, bereitet dem Fachmann keine Schwierigkeiten.

In der Regel sind in dem für wäßrige Lackbindemittel, spezielle Elektrotauchlackbindemittel, interessierenden Molgewichtsbereich von ca. 500 bis 50 000 ca. 0,01 bis 10 Milliäquivalente an Guanidinfunktionen pro Gramm Harzfeststoffe ausreichend.

Das erhaltene Additionsprodukt, das substituierte Guanidinfunktionen trägt, wird für seine Anwendung im wäßrigen Medium zweckmäßigerweise mit Säure zumindest teilweise neutralisiert. Dabei sollen auf eine Guanidingruppe 0,1 bis 1,5, vorzugsweise 0,5 bis 1,0 Protonen kommen. Die Menge an Säure richtet sich nach der Zahl der ins Harz eingeführten Guanidingruppen und nach der Höhe des zur Solubilisierung beziehungsweise Dispergierung in Wasser nötigen pH-Wertes.

Bei einer besonderen Ausführungsform werden zur Hydroxyalkylierung von Guanidin Epoxidverbindungen eingesetzt, die Hydroxylgruppen tragen, die mit teilverkappten Polyisocyanaten umgesetzt worden sind. In Frage kommen dabei z. B. teilverkapptes Toluylendiisocyanat, Isophorondiisocyanat, Hexamethylendiisocyanat oder höher kondensierte Polyisocyanate wie Umsetzungsprodukte aus 1 Mol Äthylenglykol und 2 Mol Isophorondiisocyanat oder aus 1 Mol Trimethylolpropan und 3 Mol Toluylendiisocyanat. Als Verkappungsmittel dienen z. B. Lactame wie ε-Caprolactam, Phenole, Kresole, Oxime, Piperidon, Piperidin, Acetessigsäureester, Malonester, Alkohole oder Imidazole. Die Polyisocyanate sind nur teilverkappt, so daß eine Isocyanatgruppe frei bleibt, die mit den Hydroxylgruppen der Epoxidverbindungen reagieren kann. Auf diese Weise ist es möglich, selbstvernetzende Bindemittel aufzubauen.

Die erfindungsgemäßen protonierten Additionsprodukte werden mit Wasser verdünnt, für die Anwendung als Elektrotauchlack vorzugsweise auf einen Festgehalt von 5 bis 20%. Sie können mit den in der Lackiertechnik üblichen Zusatzstoffen, wie weiteren Bindemitteln, Vernetzungsmitteln, Pigmenten, Füllstoffen, Verlaufsmitteln, Kupplungslösungsmitteln, Katalysatoren oder Weichmachern vermischt werden. Sofern die Bindemittel nicht durch Modifizierung mit halbverkappten Polyisocyanaten selbstvernetzend gemacht worden sind, ist es zweckmäßig, sie mit Vernetzungsmitteln zu vermischen, vorzugsweise in Mengen von 5 bis 40, insbesondere 15 bis 30 Gew.-%, bezogen auf Feststoff. Als Vernetzungsmittel kommen solche in Frage, die funktionelle Gruppen tragen, welche mit den Guanidin- und/oder Amino- und/oder Hydroxylfunktionen der Guanidinfunktionen tragenden Bindemittel beim Einbrennen reagieren, z. B. vollständig verkappte Polyisocyanate, Melaminformaldehyd- oder Phenolformaldehydisocyanate, Melaminformaldehyd- oder Phenolformaldehydharze, Acrylatharze, die Carboxyl- oder N-Methyloläthergruppen tragen, Epoxidharze oder Polyester- und Alkydharze.

Die mit den erfindungsgemäßen Additionsprodukten erhaltenen Bindemittel eignen sich zum Lackieren von Metallen, und sofern sie konventionell appliziert werden, auch zur Lackierung von Holz oder Kunststoff. Der Auftrag kann durch übliche Methoden wie Spritzen, Tauchen oder Gießen erfolgen, bevorzugt ist jedoch die Elektrotauchlackierung. Hierbei wird in ein wäßriges Bad zwischen eine eingetauchte Anode und dem als Kathode geschalteten zu beschichtenden Gegenstand eine Gleichspannung gelegt, die zwischen einigen bis mehreren 100 Volt betragen kann, in der Regel zwischen 50 und 500 Volt. Es wird abgeschieden, bis ein Überzug zwischen 10 und 30 μm Dicke abgeschieden ist. Sodann wird der Gegenstand aus dem Bad genommen, mit Wasser abgespült und 10 bis 30 Minuten bei Temperaturen zwischen 120 bis 250°C im Zeitraum von 1 bis 30 Minuten eingebrannt. Die Elektrotauchlackbäder können im schwach-sauren bis schwach-alkalischen Bereich betrieben werden, bevorzugt sind pH-Werte zwischen 6 und 10, insbesondere zwischen 7 und 9. Das Arbeiten im neutralen Bereich hat den Vorteil, daß die Lackieranlagen nicht korrodieren.

Man erhält Überzüge mit guten Elastizitätswerten und hervorragender Beständigkeit gegen Lösungsmittel, Detergenzien und aggressive Laugen. Die Bindemittel sind daher zum Lackieren von Automobilteilen und Haushaltsgeräten besonders gut geeignet, wie im folgenden anhand von Beispielen noch näher erläutert wird.

Die in den Beispielen genannten Teile und Prozente sind, soweit nicht anders angegeben, Gewichtsteile bzw. Gewichtsprozente.

## Beispiel 1

Ein Epoxidgruppen-haltiges Harz, das zur Umsetzung mit Guanidin geeignet ist, wurde auf folgendem Weg hergestellt:

34,2 Teile Bisphenol A wurden mit 9,41 Teilen Phenol gemischt und unter Stickstoffatmosphäre auf 160°C erhitzt. Sodann läßt man unter Rühren innerhalb von 15 Minuten 50 Teile eines flüssigen Polyglycidyläthers auf Basis Pentaerythrit (Epoxidäquivalentgewicht 165) zutropfen. Dann wird auf 100°C abgekühlt und es werden 1,22 Teile Tetrabutylammoniumjodid hinzugefügt. Bei 100°C läßt man innerhalb weiterer 50 Minuten weitere 150 Teile des genannten flüssigen Polyglycidyläthers auf Basis Pentaerythrit zulaufen. Die Reaktion wurde fortgeführt bis eine Platte-Konus-Viskosität bei 100°C von 0,52 Pa · s erreicht ist. Sodann wird bei 100°C in 15 Minuten 30 Teile Mercaptoäthanol zugefügt und bei 100°C gerührt, bis ein Restepoxidwert von 0,162 erreicht ist. Platte-Konus-Viskosität bei 100°C : 2,1 Pa · s. Mit 183,2 Teilen Methyldiglykol wird schließlich auf einen Festgehalt von ca. 60 Gew.-% verdünnt.

Die Modifizierung mit Guanidin erfolgt in der Weise, daß zu 23,3 Teilen einer 50gew.%igen Lösung von Guanidin in Methanol zunächst 100 Teile der oben genannten Lösung des abgewandelten Epoxidharzes auf Basis eines Pentaerythritpolyglycidyläthers bei 70°C in 50 Minuten zugetropft werden. Anschließend läßt man 30 Minuten nachreagieren. Sodann läßt man bei 70°C innerhalb 1 Stunde und 15 Minuten 182,4 Teile einer 60%igen Lösung eines Umsetzungsproduktes eines Polyglycidyläthers von Bisphenol A (Epoxidäquivalentgewicht 500) mit Mercaptoäthanol (0,5 Mol Mercaptoäthanol pro Epoxidgruppe, Epoxidwert der Lösung 0,077) in Äthylglykol zutropfen. Dann wird bei 70°C gerührt, bis eine konstante Endviskosität erreicht ist (0,3 Pa · s (Platte-Konus-Viskosität bei 100°C) Festgehalt 59,2%).

## Beispiel 2

Um ein vernetzbares System zu erhalten werden 118,2 Teile der gemäß Beispiel 1 erhaltenen Lösung des Guanidin-modifizierten Epoxidharzes mit 37,5 Teilen einer 80%igen Lösung in Toluol eines mit Methyläthylketoxim verkappten handelsüblichen biuretisierten Hexamethylendiisocyanat gemischt.

Zur Prüfung als konventionell zu applizierender Wasserlack werden in 155,7 Teile der oben beschriebenen Mischung aus Guanidin-modifiziertem Epoxidharz mit vollverkapptem Polyisocyanat 3 Teile Eisessig eingerührt und mit 177,6 Teilen Wasser auf einen Festgehalt von 30 Gew.-% verdünnt. Die Dispersion wurde auf zinkphosphatiertes Stahlblech gespritzt und nach 5minütigem Ablüften bei Raumtemperatur 30 Minuten bei 180°C eingebrannt. Es wurde ein acetonfester, glatter, glänzender, biegefester Überzug erhalten.

| | |
|---|---|
| Schichtdicke | 19 μm |
| Bleistifthärte | 2 H |
| Schlagtiefung | 110 ip |
| Salzsprühtest (DIN 50 021) | kein Angriff |

Zur Prüfung als kathodisch abscheidbares Elektrotauchlackbindemittel wurden in 155,7 Teile der Mischung der Lösungen aus Guanidin-modifiziertem Epoxidharz und verkapptem Polyisocyanat 3,0 Teile Eisessig eingerührt.

Durch Verdünnung mit 844,3 Teilen Wasser wurde eine stabile, milchige Dispersion mit einem Festgehalt von 10% und einem pH-Wert von 8,2 erhalten.

Aus dieser Bindemitteldispersion läßt sich bei 100 V in 2 Minuten auf einem als Kathode geschalteten zinkphosphatierten Stahlblech ein Film abscheiden, der nach dem Einbrennen (30 Minuten 180°C) einen 28 μm dicken, glatten acetonfesten Film ergibt.

| | |
|---|---|
| Schichtdicke | 25 μm |
| Bleistifthärte | 2 H |
| Schlagtiefung | 100 ip |
| Salzsprühtest (DIN 50 021) | 1 mm Unterrostung |

Wenn man in diesem Beispiel statt 37,5 Teilen verkapptem Polyisocyanat 29,5 Teile eines hochverätherten Melaminharzes einsetzt, um ein vernetzbares Bindemittelsystem zu erhalten, resultieren ebenfalls vorteilhafte Elektrotauchlackbindemittel.

## Beispiel 3

Um ein vernetzbares System zu erhalten, werden 80 Teile der gemäß Beispiel 1 erhaltenen Lösung des Guanidin-modifizierten Epoxidharzes mit 20 Teilen eines handelsüblichen mit Methanol/Äthanol hochverätherten Melaminharzes gemischt.

Nach Zusatz von einigen Tropfen Trikresylphosphat wurde die Bindemittellösung auf zinkphosphatiertes Stahlblech gespritzt und 30 Minuten bei 180°C eingebrannt. Es wurde ein acetonfester, glatter, glänzender, biegefester Überzug erhalten.

| | |
|---|---|
| Schichtdicke | 18 μm |
| Bleistifthärte | 6 H |
| Schlagtiefung | 160 ip |
| Salzsprühtest (DIN 50 021) | kein Angriff |

**0 017 232**

### Beispiel 4

Es wird zunächst ein teilverkapptes 2,4-Toluylendiisocyanat hergestellt, in dem 130,2 Teile 2-Äthylhexanol unter Rühren, Feuchtigkeitsausschluß und Stickstoff zu einer Mischung von 174 Teilen 2,4-Toluylendiisocyanat und 20 Teilen Methylbutylketon in ca. 4 Stunden zugegeben werden. Dabei wird die Reaktionstemperatur unter 30°C gehalten. Dann wird 1 Stunde bei 25°C nachgerührt.

Ein Guanidin-modifiziertes, selbstvernetzendes Epoxidharz wird hergestellt, indem zu 833 Teilen einer wasserfreien 60%igen Lösung des Polyglycidyläthers von Bisphenol A (Epoxidäquivalentgewicht 500) in Methylbutylketon bei 90°C die Gesamtmenge der vorstehend erhaltenen Lösung des teilverkappten 2,4-Toluylendiisocyanats und 0,1 ml Dibutylzinndilaurat hinzugegeben werden. Bei 120°C läßt man sodann 40 Minuten reagieren.

Die erhaltene Lösung läßt man darauf zu 497,5 Teilen einer 12,6%igen Lösung von Guanidin in n-Butanol unter Stickstoff bei 70°C unter äußerer Kühlung im Verlauf von 30 Minuten zutropfen. Sodann läßt man 2 Stunden nachreagieren.

Man erhält so eine klare Lösung.

Nach Neutralisation mit 60 Teilen Eisessig wird das Bindemittel unter gutem Rühren in 435 Teile Wasser eingetragen, wobei bei 30°C und 30 mbar das n-Butanol azeotrop abdestilliert wird. Das im Azeotrop jeweils mitgehende Wasser wird rückgeführt. Es wird eine milchige Dispersion mit einem Festgehalt (FG) von 50,6% und pH-Wert 8,1 erhalten.

Zur Prüfung als konventionell zu applizierender Wasserlack wurde mit Wasser auf einen FG von 30% verdünnt. Die Dispersion wird dann auf ein zinkphosphatiertes Stahlblech aufgerakelt und nach 5minütigem Ablüften bei Raumtemperatur 30 Minuten bei 180°C eingebrannt. Man erhält einen acetonfesten, glatten, glänzenden Überzug.

| | |
|---|---|
| Schichtdicke | 23 µm |
| Bleistifthärte | 3 H |
| Schlagtiefung | 120 ip |
| Salzsprühtest (DIN 50 021) | kein Angriff |

### Beispiel 5

Ein Epoxidgruppen-haltiges Bindemittelgemisch, das zur Umsetzung mit Guanidin geeignet ist, wurde auf folgendem Weg hergestellt:

Ein Gemisch von 400 Teilen eines flüssigen Pentaerythritpolyglycidyläthers (Epoxidäquivalentgewicht 165), 400 Teilen eines Polyglycidyläthers von Bisphenol A (Epoxidäquivalentgewicht 500), 91,2 Teilen Bisphenol A und 37,6 Teilen Phenol wird unter Stickstoff bei 100°C homogenisiert. Sodann läßt man in 30 Minuten bei 100°C 74,4 Teile Mercaptoäthanol zutropfen und 30 Minuten nachreagieren. Dann läßt man nach Zugabe von 5,0 Teilen Tetrabutylammoniumjodid bei 100°C rühren, bis eine Platte-Konus-Viskosität bei 150°C von 0,5 Pa · s erreicht ist (Zeitbedarf: ca. 2 Stunden). Sodann wird durch Zugabe von 669 Teilen Äthylglykol auf einen Festgehalt von 60 Gew.-% verdünnt und abgekühlt. Platte-Konus-Viskosität der Lösung bei 75°C 0,02 Pa · s. Epoxidwert 0,069.

200 Teile der so erhaltenen Lösung werden mit 5,23 Teilen Mercaptoäthanol 2 Stunden bei 80°C zur Reaktion gebracht, um einen Epoxidwert von 0,034 einzustellen. Die gesamte erhaltene Lösung mit einem Festgehalt von 61 Gew.-% wird sodann zu 7,96 Teilen einer 50%igen Guanidin-Lösung in Methanol bei 70°C im Verlauf von 1 Stunde und 20 Minuten unter Rühren zugetropft und bis zur Viskosität konstant gerührt. Man erhält eine Lösung mit Festgehalt 60,6 Gew.-% und einer Platte-Konus-Viskosität bei 75°C von 0,42 Pa · s.

Um ein vernetzbares System zu erhalten, werden 115,5 Teile der Lösung des Guanidin-modifizierten Epoxidharzes mit 37,5 Teilen einer 80%igen Lösung eines mit Methyläthylketoxim verkappten handelsüblichen biuretisierten Hexamethylendiisocyanat in Toluol gemischt.

Zur Prüfung als kathodisch abscheidbares Elektrotauchlackbindemittel werden in 153 Teile der eben genannten Mischung 1,8 Teile Eisessig eingerührt.

Durch Verdünnung mit 847 Teilen Wasser wurde eine stabile, milchige Dispersion mit einem Festgehalt von 10% und einem pH-Wert von 7,4 erhalten.

Aus dieser Bindemitteldispersion läßt sich bei 120 V in 2 Minuten auf einem als Kathode geschalteten zinkphosphatierten Stahlblech ein Film abscheiden, der nach dem Einbrennen (30 Minuten, 180°C) einen 22 µm dicken, glatten, biegefesten acetonfesten Film ergibt.

| | |
|---|---|
| Bleistifthärte | 6 H |
| Schlagtiefung | 160 ip |
| Salzsprühtest (DIN 50 021) | 1 – 2 mm Unterrostung |

6

**0 017 232**

Beispiel 6

Um ein vernetzbares System zu erhalten, werden 80 Teile der gemäß Beispiel 5 erhaltenen Lösung des Guanidin-modizierten Epoxidharzes mit 20 Teilen eines handelsüblichen mit Methanol/Äthanol hochverätherten Melaminharzes gemischt.

Nach Zusatz von einigen Tropfen Trikresylphosphat wurde die Bindemittellösung auf zinkphosphatiertes Stahlblech gespritzt und 30 Minuten bei 180°C eingebrannt. Es wurde ein acetonfester, glatter, glänzender, biegefester Überzug erhalten.

| | |
|---|---|
| Schichtdicke | 20 μm |
| Bleistifthärte | 5 H |
| Schlagtiefung | 140 ip |
| Pendelhärte | 199 |

**Patentansprüche**

1. Epoxidgruppenfreies, unvernetztes Additionsprodukt, dadurch gekennzeichnet, daß es durch Umsetzung

a)   einer Epoxidverbindung mit
b)   Guanidin oder einem Guanidinderivat

erhalten worden ist, wobei mindestens 1 Mol Guanidin oder Guanidinderivat (b) pro Epoxidäquivalent der Epoxidverbindung (a) umgesetzt worden ist, das Additionsprodukt zusätzlich verkappte Isocyanatgruppen enthält und gegebenenfalls durch Säurezusatz teilweise oder vollständig neutralisiert worden ist.

2. Additionsprodukt nach Anspruch 1, dadurch gekennzeichnet, daß als Epoxidverbindung ein Glycidäther eines mehrwertigen Alkohols oder Phenols oder ein epoxidiertes Öl verwendet wird.

3. Additionsprodukt nach einem der vorhergehenden Ansprüche, dadurch gekennzeichnet, daß als Guanidinderivat ein Alkylguanidin oder ein Guanidinumsalz verwendet wird.

4. Additionsprodukt nach einem der vorhergehenden Ansprüche, dadurch gekennzeichnet, daß es 0,01 bis 10 Milliäquivalente an Guanidinfunktionen pro Gramm Harzfeststoff enthält.

5. Verwendung des Additionsproduktes nach einem der vorhergehenden Ansprüche in Kombination mit einem vollverkappten Polyisocyanat, Aminoplastharz und/oder Phenolplastharz als Bindemittel in Überzugsmitteln.

6. Verwendung des Additionsproduktes nach einem der vorhergehenden Ansprüche gegebenenfalls in Kombination mit einem vollverkappten Polyisocyanat, einem Aminoplastharz und/oder Phenolplastharz als Bindemittel für die kathodische Elektrotauchlackierung von Metallteilen.

**Claims**

1. An epoxide-free, non-crosslinked adduct characterized in that it has been obtained by reacting

a)   an epoxide compound with
b)   guanidine or a guanidine derivative,

at least 1 mole of guanidine or guanidine derivate (b) having been reacted per epoxide equivalent of the epoxide compound (a), and the adduct additionally containing blocked isocyanate groups and having been optionally partially or completely neutralized by adding an acid.

2. An adduct as claimed in claim 1, characterized in a glycidyl ether of a polyhydric alcohol or phenol, or an epoxidized oil is used as the epoxide compound.

3. An adduct as claimed in any of the preceding claims, characterized in that alkylguanidine or a guanidinium salt is used as the guanidine derivative.

4. An adduct as claimed in any of the preceding claims, characterized in that it contains from 0.01 to 10 milliequivalents of guanidine groups per gram of resin solids.

5. Use of an adduct as claimed in any of the preceding claims, in combination with a completely blocked polyisocyanate, aminoplast resin and/or phenoplast resin, as a binder in coatings.

6. Use of an adduct as claimed in any of the preceding claims, with or without a completely blocked polyisocyanate, an aminoplast resin and/or a phenoplast resin, as a binder for the cathodic electrocoating of metal articles.

7

## Revendications

1. Produit d'addition exempt de groupes époxyde, non réticulé, caractérisé en ce qu'il est préparé en faisant réagir

a)   un composé époxy et
b)   la guanidine ou un dérivé de la guanidine

avec réaction d'au moins 1 mole de guanidine ou de dérivé de guanidine (b) pour chaque équivalent époxy du composé époxy (a), ce produit d'addition contenant de plus des groupes isocyanate bloqués et ayant éventuellement été neutralisé partiellement ou complètement par addition d'un acide.

2. Produit d'addition suivant la revendication 1, caractérisé en ce que le composé époxy est choise parmi les éthers de glycidyle d'un phénol ou alcool polyfonctionnel et les huiles époxydées.

3. Produit d'addition suivant l'une des revendications précédentes, caractérisé en ce que le dérivé de guanidine est une alcoyl-guanidine ou un sel de guanidinium.

4. Produit d'addition suivant l'une des revendications précédentes, caractérisé en ce qu'il contient 0,01 à 10 milli-équivalents de fonction guanidine par gramme de matière résineuse solide.

5. Utilisation d'un produit d'addition suivant l'une des revendications précédentes en combinaision avec un polyisocyanate entièrement bloqué, une résine d'aminoplaste et(ou) une résine de phénoplaste, comme liant dans des compositions de revêtement.

6. Utilisation d'un produit d'addition suivant l'une des revendications précédentes, le cas échéant en combinaison avec un polyisocyanate entièrement bloqué, une résine d'aminoplaste et(ou) une résine de phénoplaste, comme liant pour le vernissage électrophorétique cathodique de surfaces métalliques.